# EUROPEAN PATENT APPLICATION

(11) **EP 4 814 464 A1**
(43) Date of publication of application: **30.09.2026**
(21) Application number: 26166983.2
(22) Date of filing: 24.03.2026
(51) Int. Cl.: G01L 13/00, G01L 19/06

(54) **PROTECTIVE COVER FOR DIFFERENTIAL PRESSURE SENSOR**

(30) Priority: 27.03.2025 IN 202541028891
(71) Applicant: Cummins Emission Solutions, Inc., Columbus, IN 47201 (US)
(72) Inventor: Patil, Alankar Shankar, 416211 Kolhapur (IN); Agale, Vijay Vitthal, 422102 Nashik (IN); Agarwal, Priyanshi, 209625 Farrukhabad (IN)
(74) Representative: Marks & Clerk Cummins

(57) **Abstract**

A differential pressure sensor assembly includes a sensor housing having an upstream pressure port and a downstream pressure port in flow communication with a cavity. The sensor housing has an air vent in flow communication with the cavity. The differential pressure sensor assembly includes a pressure sensor device received in the cavity sensing a pressure difference between the upstream pressure port and the downstream pressure port. The differential pressure sensor assembly includes a filter element received in the air vent and a filter cover covering the filter element. The differential pressure sensor assembly includes a protection cover coupled to an exterior of the sensor housing. The protection cover covers the filter cover and the air vent to prevent access to the filter cover and the air vent.

## Description

### BACKGROUND OF THE INVENTION

The subject matter herein relates generally to a differential pressure sensor system for monitoring the performance of a diesel particulate filter (DPF) in a vehicle exhaust system.

Diesel engines commonly employ diesel particulate filters (DPFs) to reduce particulate emissions. Over time, the accumulation of soot and ash in the DPF increases backpressure, reducing engine efficiency and potentially damaging engine components. To prevent excessive clogging, a differential pressure sensor is used to measure pressure differences across the DPF, enabling timely regeneration or maintenance actions. Conventional differential pressure sensors typically include an air vent in the housing thereof that provides access to the interior of the sensor housing to ensure proper airflow through the sensor housing. A filter is provided in the air vent to prevent contamination in the interior of the sensor housing. Conventional differential pressure sensors are not without disadvantages. For instance, the air vent and filter may become contaminated with water, dirt and debris over time leading to sensor failures.

Thus, there is a need for an improved differential pressure sensor system that enhances accuracy, reliability, and durability in harsh exhaust environments.

### BRIEF DESCRIPTION OF THE INVENTION

In one embodiment, a differential pressure sensor assembly is provided and includes a sensor housing that has a cavity. The sensor housing has an upstream pressure port and a downstream pressure port in flow communication with the cavity. The sensor housing has an air vent in flow communication with the cavity. The differential pressure sensor assembly includes a pressure sensor device received in the cavity. The pressure sensor device sensing a pressure difference between the upstream pressure port and the downstream pressure port. The differential pressure sensor assembly includes a filter element received in the air vent and a filter cover covering the filter element. The differential pressure sensor assembly includes a protection cover coupled to an exterior of the sensor housing. The protection cover covering the filter cover and the air vent to prevent access to the filter cover and the air vent.

In another embodiment, a differential pressure sensor assembly is provided and includes a sensor housing that has walls forming a cavity. The sensor housing includes a front, a rear, a first side, a second side, a top and a bottom. The sensor housing has an upstream pressure port and a downstream pressure port in flow communication with the cavity. The sensor housing has an air vent at the front in flow communication with the cavity. The differential pressure sensor assembly includes a pressure sensor device received in the cavity. The pressure sensor device sensing a pressure difference between the upstream pressure port and the downstream pressure port. The differential pressure sensor assembly includes a filter element received in the air vent and a filter cover covering the filter element. The differential pressure sensor assembly includes a protection cover coupled to an exterior of the sensor housing. The protection cover includes a front wall, a rear wall and an upper wall. The front wall extends along the front of the sensor housing to cover the filter cover and the air vent to prevent access to the filter cover and the air vent. The rear wall extends along the rear of the sensor housing. The upper wall extends along the top of the sensor housing.

In a further embodiment, a diesel particulate filter system is provided and includes a diesel particulate filter configured to remove particulate matter from engine exhaust gases. The diesel particulate filter system includes a differential pressure sensor assembly operatively coupled to the diesel particulate filter. The differential pressure sensor assembly includes a sensor housing that has a cavity. The sensor housing has an upstream pressure port in flow communication with an upstream portion of the diesel particulate filter and a downstream pressure port in flow communication with a downstream portion of the diesel particulate filter. The upstream and downstream pressure ports being in flow communication with the cavity. The sensor housing has an air vent in flow communication with the cavity. The differential pressure sensor assembly includes a pressure sensor device received in the cavity. The pressure sensor device sensing a pressure difference between the upstream pressure port and the downstream pressure port. The differential pressure sensor assembly includes a filter element received in the air vent and a filter cover covering the filter element. The differential pressure sensor assembly includes a protection cover coupled to an exterior of the sensor housing. The protection cover covering the filter cover and the air vent to prevent access to the filter cover and the air vent.

### BRIEF DESCRIPTION OF THE DRAWINGS

Figure 1 illustrates a portion of a vehicle exhaust system for a vehicle in accordance with an exemplary embodiment.
Figure 2 is an enlarged view of a portion of the vehicle exhaust system shown in Figure 1 in accordance with an exemplary embodiment.
Figure 3 is an exploded view of a portion of the differential pressure sensor assembly in accordance with an exemplary embodiment.
Figure 4 is an assembled view of a portion of the differential pressure sensor assembly in accordance with an exemplary embodiment.
Figure 5 is a perspective view of the protection cover in accordance with an exemplary embodiment.
Figure 6 is a front view of the protection cover in accordance with an exemplary embodiment.
Figure 7 is a rear view of the protection cover in accordance with an exemplary embodiment.
Figure 8 is a top view of the protection cover in accordance with an exemplary embodiment.
Figure 9 is a bottom view of the protection cover in accordance with an exemplary embodiment.
Figure 10 is a first side view of the protection cover in accordance with an exemplary embodiment.
Figure 11 is a second side view of the protection cover in accordance with an exemplary embodiment.
Figure 12 illustrates a portion of the vehicle exhaust system in accordance with an exemplary embodiment showing the differential pressure sensor assembly in a first mounting orientation with the protective cover removed to illustrate the sensor housing.
Figure 13 illustrates a portion of the vehicle exhaust system in accordance with an exemplary embodiment showing the differential pressure sensor assembly in the first mounting orientation with the protective cover installed.
Figure 14 is a side view of the differential pressure sensor assembly mounted to the mounting structure in accordance with an exemplary embodiment.
Figure 15 is a front view of the differential pressure sensor assembly mounted to the mounting structure in accordance with an exemplary embodiment.
Figure 16 illustrates a portion of the vehicle exhaust system in accordance with an exemplary embodiment showing the differential pressure sensor assembly in a second mounting orientation with the protective cover removed to illustrate the sensor housing.
Figure 17 illustrates a portion of the vehicle exhaust system in accordance with an exemplary embodiment showing the differential pressure sensor assembly in the second mounting orientation with the protective cover installed.
Figure 18 illustrates a portion of the vehicle exhaust system showing the differential pressure sensor assembly with a protective cover in accordance with an exemplary embodiment.
Figure 19 is a perspective view of the protection cover shown in Figure 18 in accordance with an exemplary embodiment.

### DETAILED DESCRIPTION OF THE INVENTION

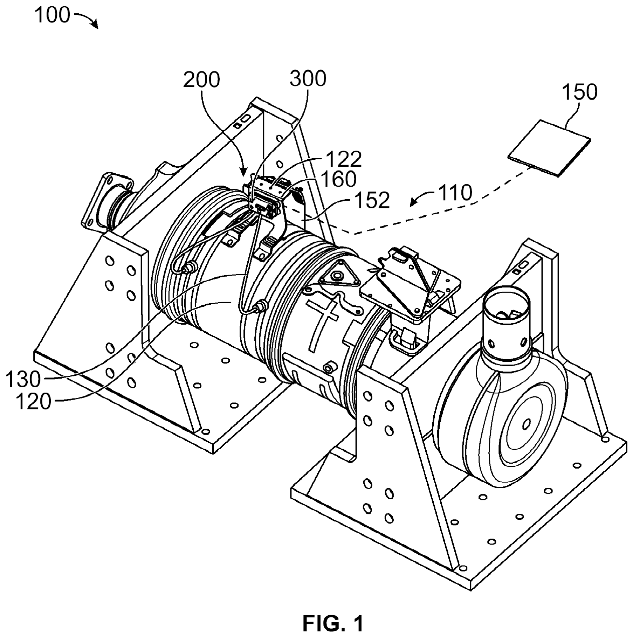

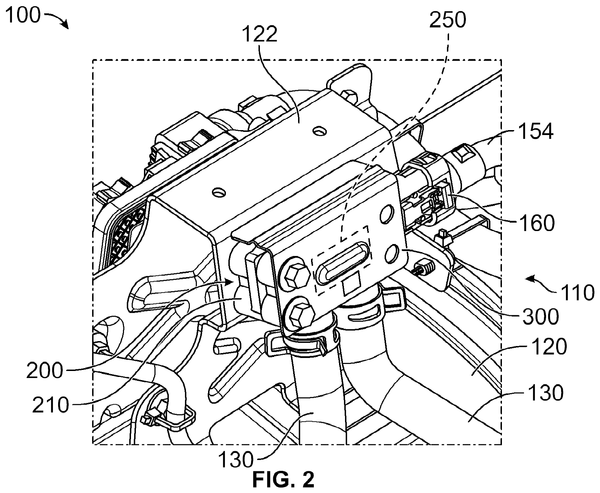

Figure 1 illustrates a portion of a vehicle exhaust system 100 for a vehicle in accordance with an exemplary embodiment. Figure 2 is an enlarged view of a portion of the vehicle exhaust system 100 shown in Figure 1. The vehicle exhaust system 100 includes a diesel particulate filter system 110 having a diesel particulate filter 120 positioned in the exhaust flow path. The diesel particulate filter 120 is configured to remove particulate matter or soot from exhaust gases of the diesel engine of the vehicle.

In an exemplary embodiment, the diesel particulate filter system 110 includes a differential pressure sensor assembly 200 operatively coupled to the diesel particulate filter 120. In an exemplary embodiment, the differential pressure sensor assembly 200 is mounted to the diesel particulate filter 120, such as to a mounting structure 122 of the diesel particulate filter 120. The mounting structure 122 may be a bracket, panel, wall, surface or other type of mounting structure of the diesel particulate filter 120. The differential pressure sensor assembly 200 is operably connected to the diesel particulate filter 120 via conduits 130. The conduits 130 may be hoses, tubes, ducts, a manifold, or other types of channels. The conduits 130 are connected to upstream and downstream portions of the diesel particulate filter 120 for measurement of a pressure differential between the upstream and downstream portions of the diesel particulate filter 120. The differential pressure sensor assembly 200 measures the pressure differential to assess filter conditions and improve engine performance.

In an exemplary embodiment, the diesel particulate filter system 110 is communicatively coupled to an engine control unit 150 of the vehicle. For example, the differential pressure sensor assembly 200 communicates with the vehicle's engine control unit 150 via an electronic interface, transmitting real-time pressure readings. For example, an electrical connector 160 may be coupled to the differential pressure sensor assembly 200 and coupled to the engine control unit 150 by a cable 152. The engine control unit 150 processes the differential pressure data, utilizing predefined thresholds to determine when regeneration of the diesel particulate filter 120 is necessary.

In an exemplary embodiment, the differential pressure sensor assembly 200 includes a sensor housing 210 holding a pressure sensor device 250 (shown in phantom) and a protection cover 300 coupled to the sensor housing 210. The protection cover 300 is used to cover the air vent/filter area of the sensor housing 210 to prevent dirt, debris and water entry into the sensor housing 210. For example, the protection cover 300 covers one or more sides of the sensor housing 210. The protection cover 300 prevents clogging of the air vent and/or the filter for improved operation of the differential pressure sensor assembly 200 to enhance accuracy, reliability, and durability in harsh exhaust environments.

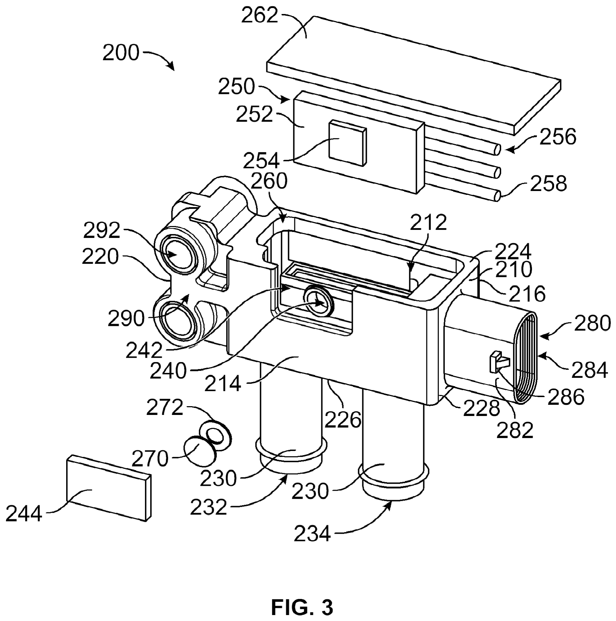

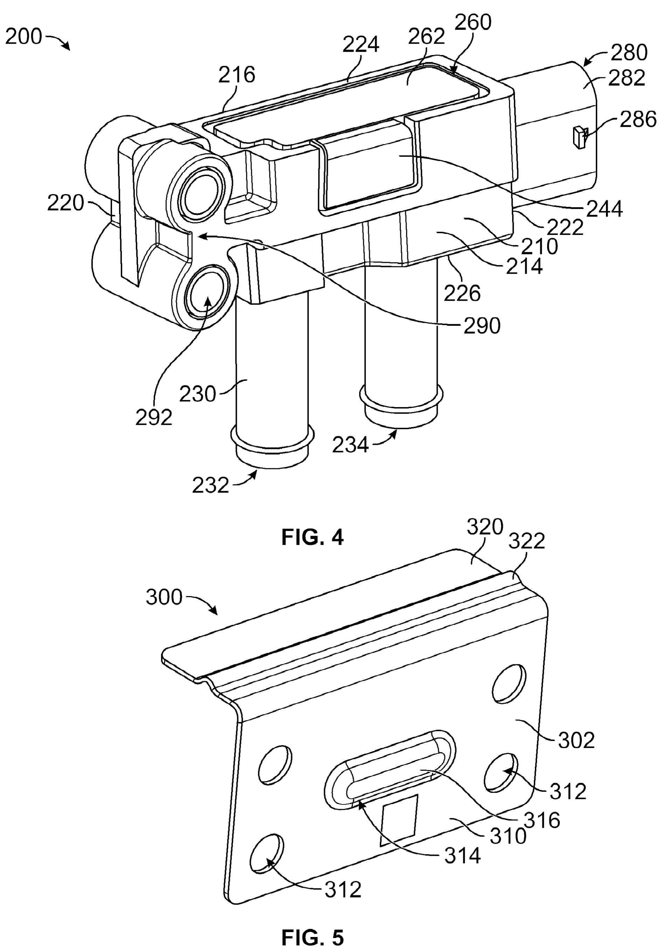

Figure 3 is an exploded view of a portion of the differential pressure sensor assembly 200 in accordance with an exemplary embodiment. Figure 4 is an assembled view of a portion of the differential pressure sensor assembly 200 in accordance with an exemplary embodiment. The protection cover 300 (shown in Figure 2) is removed in Figures 3 and 4 to illustrate the sensor housing 210 and other components.

The differential pressure sensor assembly 200 includes the sensor housing 210, a pressure sensor device 250, a filter element 270, a connector interface 280, and a mounting bracket 290. The pressure sensor device 250 and the filter element 270 are configured to be received in the sensor housing 210. The connector interface 280 is configured to be coupled to the electrical connector 160 (shown in Figure 1). The mounting bracket 290 is used to mount the differential pressure sensor assembly 200 to the diesel particulate filter 120, such as to the mounting structure 122 of the diesel particulate filter 120.

The sensor housing 210 includes walls forming a cavity 212. The body of the sensor housing 210 may be manufactured from a plastic material. For example, the sensor housing 210 may be an injection molded part. The sensor housing 210 extends between a front 214 and a rear 216 of the body of the sensor housing 210. The sensor housing 210 extends between a first side 220 and a second side 222 of the body of the sensor housing 210. The sensor housing 210 extends between a top 224 and a bottom 226 of the body of the sensor housing 210. In the illustrated embodiment, the mounting bracket 290 is provided at the first side 220. Other locations are possible in alternative embodiments. In the illustrated embodiment, the connector interface 280 is provided at the second side 222. Other locations are possible in alternative embodiments.

In an exemplary embodiment, the sensor housing 210 includes fittings 230 for connection to the conduits 130 (shown in Figure 1). A first of the fittings includes an upstream pressure port 232 configured to be connected in flow communication with the conduit 130 associated with the upstream portion of the diesel particulate filter 120. A second of the fittings includes a downstream pressure port 234 configured to be connected in flow communication with the conduit 130 associated with the downstream portion of the diesel particulate filter 120. The upstream pressure port 232 and the downstream pressure port 234 are in flow communication with the cavity 212. The fittings 230 may be generally cylindrical. The fittings 230 may extend parallel to each other. However, in alternative embodiments, the fittings 230 may be arranged at different angles, such as angled away from each other. In the illustrated embodiment, the fittings 230 are located at the bottom 226. Other locations are possible in alternative embodiments. Optionally, the fittings 230 may be located at different sides of the sensor housing 210. In the illustrated embodiment, the fittings 230 are barb fittings having one or more barbs along the fittings 230, such as at the distal ends. The conduits 130 (for example, hoses) may be connected to the fittings 230 using hose clamps. Other types of fittings may be provided in alternative embodiments, such as crimp fittings, push-lock fittings, quick connect fittings, compression fittings, threaded fittings, and the like.

The mounting bracket 290 is used to mount the sensor housing 210 to the mounting structure 122 of the diesel particulate filter 120. The mounting bracket 290 is shown at the first side 220. However, other locations are possible in alternative embodiments. In an exemplary embodiment, the mounting bracket 290 includes one or more mounting openings 292 therethrough configured to receive bolts (not shown). Other types of mountings may be used in alternative embodiments, such as latches, clips, straps, welding, or other types of mountings.

In an exemplary embodiment, the sensor housing 210 includes an air vent 240 that is open to the cavity 212. The air vent 240 allows the differential pressure sensor assembly 200 to equalize pressure with the surrounding environment to ensure accurate pressure measurements, such as by compensating for changes in atmospheric pressure due to altitude or weather conditions. The filter element 270 is received in the air vent 240 to filter airflow through the air vent 240. The filter element 270 may be a woven fabric filter, a metal screen filter, a fibrous filter element, or other types of filters. The filter element 270 may be disposable. For example, the filter element 270 may be removable and replaceable. Optionally, a gasket 272, such as an O-ring, may be received in the air vent 240 to create a seal interface for the filter element 270. In the illustrated embodiment, the air vent 240 is located at the front 214. Other locations are possible in alternative embodiments.

In an exemplary embodiment, the sensor housing 210 includes a pocket 242 surrounding the air vent. A filter cover 244 is received in the pocket 242. For example, the filter cover 244 may be recessed within the sensor housing 210 or sit generally flush with the exterior walls of the sensor housing 210. The filter cover 244 covers the filter element 270. The filter cover 244 may retain the filter element 270 in the air vent 240. An air gap is formed between the filter cover 244 and the sensor housing 210 to allow air flow through the filter element 270 and the air vent 240. For example, the air gaps may be formed around the edges of the filter cover 244 in the spaces between the edges of the filter cover and the surfaces defining the pocket 242. In the illustrated embodiment, the pocket 242 is rectangular shaped and the filter cover 244 has a complimentary rectangular shape. Other shapes are possible in alternative embodiments. In an exemplary embodiment, the filter cover 244 may be snap fit into the pocket 242 of the sensor housing 210. The filter cover 244 may be attached by other means in alternative embodiments, such as being clipped, hingedly coupled, fastened, or otherwise secured to the sensor housing 210. In an exemplary embodiment, the protection cover 300 (shown in Figure 2) is coupled to the exterior of the sensor housing 210 to cover the filter cover 244 and the air vent 240 to prevent access to the filter cover 244 and the air vent 240. The protection cover 300 is used to cover the air vent 240 and filter cover 244 to prevent dirt, debris and water from entering into the sensor housing 210.

The pressure sensor device 250 is configured to be received in the cavity 212. For example, the pressure sensor device 250 may be loaded into the cavity 212 through an opening 260 in the top 224 of the sensor housing 210. In an exemplary embodiment, a lid 262 is configured to be coupled to the sensor housing 210 at the top 224 to close the opening 260 and retain the pressure sensor device 250 in the cavity 212. Optionally, a seal (not shown) may be provided between the lid 262 and the sensor housing 210 to seal between the lid 262 and the sensor housing 210. The pressure sensor device 250 is configured to sense a pressure difference between the upstream pressure port 232 and the downstream pressure port 234.

In an exemplary embodiment, the pressure sensor device 250 includes a sensor circuit board 252, a pressure sensor element 254 coupled to the sensor circuit board 252, and a sensor connector 256 coupled to the sensor circuit board 252. The sensor connector 256 includes contacts 258 configured to be located at the connector interface 280 for interfacing with the electrical connector 160. The contacts 258 are electrically connected to the pressure sensor element 254 via the sensor circuit board 252 and transmit sensor data from the pressure sensor element 254 to the electrical connector 160. The pressure sensor element measures a differential pressure between the upstream pressure port 232 and the downstream pressure port 234. The pressure sensor element 254 may be a piezoresistive measurement element, a capacitive measurement element, or other type of pressure sensor element.

The connector interface 280 is located at the second side 222. However, other locations are possible in alternative embodiments. The connector interface 280 is configured to be coupled to the electrical connector 160. In the illustrated embodiment, the connector interface 280 includes a connector shroud 282 forming a receptacle 284. The contacts 258 extend into the receptacle 284 for mating with he electrical connector 160. In an exemplary embodiment, the connector interface 280 includes a connector latch 286 for latchably coupling the electrical connector 160 to the connector shroud 282.

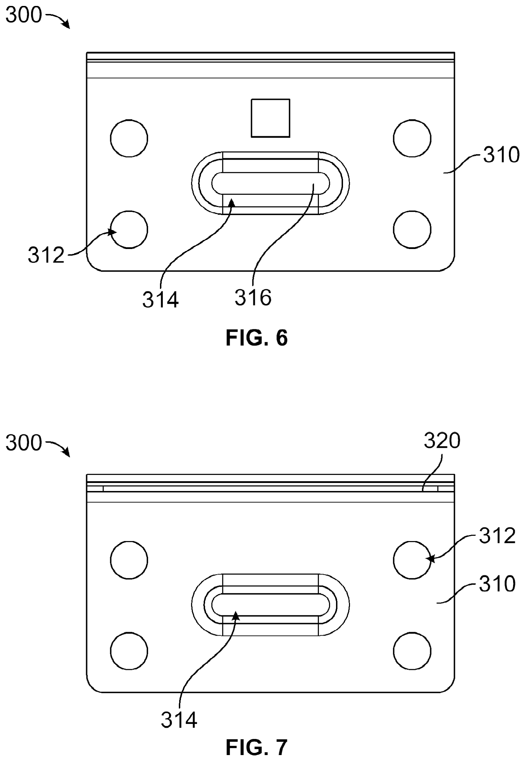

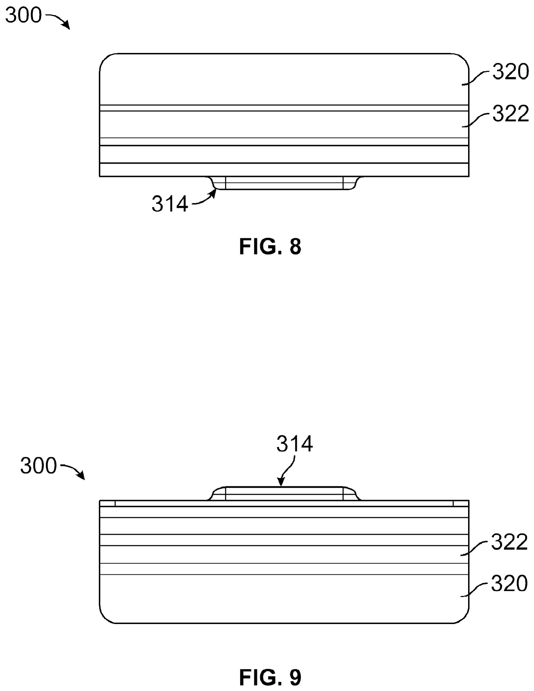

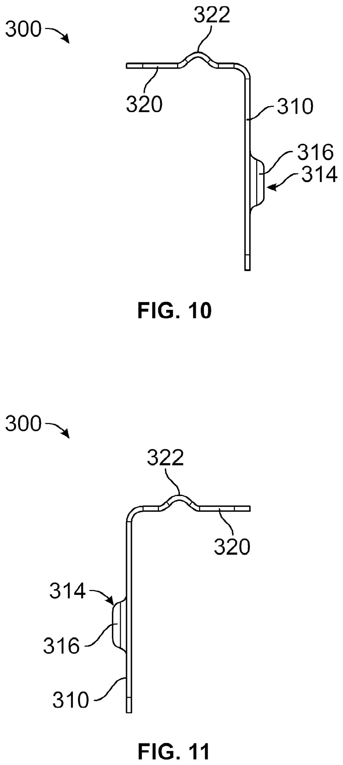

Figure 5 is a perspective view of the protection cover 300 in accordance with an exemplary embodiment. Figure 6 is a front view of the protection cover 300 in accordance with an exemplary embodiment. Figure 7 is a rear view of the protection cover 300 in accordance with an exemplary embodiment. Figure 8 is a top view of the protection cover 300 in accordance with an exemplary embodiment. Figure 9 is a bottom view of the protection cover 300 in accordance with an exemplary embodiment. Figure 10 is a first side view of the protection cover 300 in accordance with an exemplary embodiment. Figure 11 is a second side view of the protection cover 300 in accordance with an exemplary embodiment.

In an exemplary embodiment, the protection cover 300 includes a stamped and formed body 302 manufactured from a metal sheet. The metal sheet is stamped into a predetermined size with corresponding stamped features, such as openings. The stamped metal sheet is then formed into a predetermined shape. The protection cover 300 is configured to cover one or more walls of the sensor housing 210 (shown in Figure 3). In the illustrated embodiment, the protection cover 300 has a generally L-shaped profile. Other shapes are possible in alternative embodiments, such as a U-shaped profile, or a flat or planar profile, or a box shape. Other features may be formed into the body 302.

In an exemplary embodiment, the protection cover 300 includes a front wall 310 configured to cover the air vent 240 (shown in Figure 3) and the filter element 270 (shown in Figure 3) as well as the filter cover 244 (shown in Figure 4). The front wall 310 is configured to extend along and cover the front 214 of the sensor housing 210 (shown in Figure 3). The front wall 310 may be generally planar.

In an exemplary embodiment, the front wall 310 includes openings 312. The openings 312 are configured to be aligned with the mounting openings 292 of the mounting bracket 290 (shown in Figure 3) to receive the bolts to mount the differential pressure sensor assembly 200 to the mounting structure 122. In the illustrated embodiment, the openings 312 are located at both the first side and the second side of the protection cover 300. Providing multiple locations of the openings 312 allows different mounting arrangements. For example, the protection cover 300 may be mounted to the front of the sensor housing 210 or the rear of the sensor housing 210. The multiple locations of the openings 312 may allow mounting of the protection cover 300 to different types of differential pressure sensor assemblies 200, such as having different types of mounting brackets 290. The openings 312 may have different spacings to accommodate different mounting arrangements.

In an exemplary embodiment, the front wall 310 includes an orientation feature 314 to orient the protection cover 300 relative to the sensor housing 210. In the illustrated embodiment, the orientation feature 314 extends forwardly from the front wall 310. The orientation feature 314 may include a protrusion 316 extending away from the sensor housing 210. In various embodiments, the orientation feature 314 is integral (for example, unitary) with the front wall 310. For example, the orientation feature 314 may be stamped and/or formed with the body 302. For example, the orientation feature 314 may be pressed, drawn, punched, bent or formed by other metal forming processes with the body 302. Other types of orientation features may be used in alternative embodiments. The orientation feature 314 may be a poka-yoke feature or polarization feature to ensure proper positioning and mounting to the sensor housing 210. For example, the orientation feature 314 may prevent mounting to the sensor housing 210 in a reverse or incorrect mounting orientation.

In an exemplary embodiment, the protection cover 300 includes an upper wall 320 extending from the front wall 310. The upper wall 320 is configured to extend along and cover the top 224 of the sensor housing 210. The upper wall 320 may be generally planar. The upper wall 320 may extend generally perpendicular to the front wall 310. In an exemplary embodiment, the upper wall 320 of the protection cover 300 includes a strengthening rib 322 to provide rigidity to the protection cover. In various embodiments, the strengthening rib 322 is integral (for example, unitary) with the upper wall 320. For example, the strengthening rib 322 may be stamped and/or formed with the body 302. For example, the strengthening rib 322 may be pressed, drawn, punched, bent or formed by other metal forming processes with the body 302. Other types of strengthening elements may be used in alternative embodiments to provide rigidity to the upper wall 320. The front wall 310 may additionally or alternatively include the strengthening rib.

The protection cover 300 may include other walls in alternative embodiments, such as a rear wall extending from the upper wall 320 opposite the front wall 310 and/or a lower wall extending from the bottom of the front wall 310 and/or the rear wall and/or a side wall extending from the right side and/or the left side of the front wall 310 and/or the rear wall and/or the upper wall 320. The other walls extend along and cover other sides of the sensor housing 210.

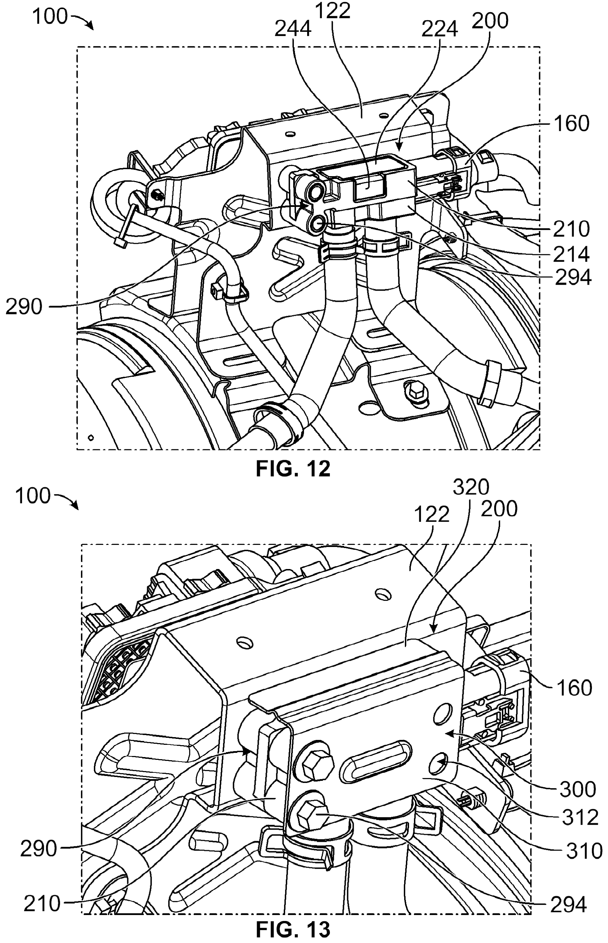

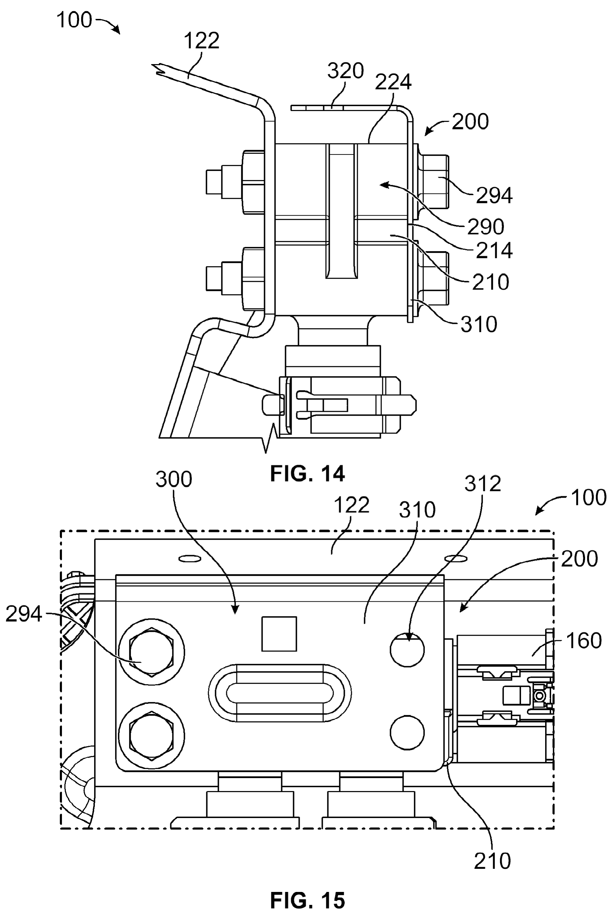

Figure 12 illustrates a portion of the vehicle exhaust system 100 in accordance with an exemplary embodiment showing the differential pressure sensor assembly 200 in a first mounting orientation with the protective cover 300 removed to illustrate the sensor housing 210. Figure 13 illustrates a portion of the vehicle exhaust system 100 in accordance with an exemplary embodiment showing the differential pressure sensor assembly 200 in the first mounting orientation with the protective cover 300 installed. Figure 14 is a side view of the differential pressure sensor assembly 200 mounted to the mounting structure 122. Figure 15 is a front view of the differential pressure sensor assembly 200 mounted to the mounting structure 122.

In the first orientation, the sensor housing 210 is mounted to the mounting structure 122 with the air vent 240 and the filter cover 244 facing forward away from the mounting structure 122. The mounting bracket 290 is located at the left side of the sensor housing 210 and the electrical connector 160 is coupled to the right side of the sensor housing 210. Bolts 294 pass through the openings 312 at the left side of the protective cover 300 and the mounting openings 292 at the left side of the sensor housing 210.

When assembled, the front wall 310 of the protective cover 300 extends along and covers the front 214 of the sensor housing 210 and the upper wall 320 extends along and covers the top 224 of the sensor housing 210. The upper wall 320 extends toward the mounting structure 122. The upper wall 320 may abut against the mounting structure 122 and/or overlap the mounting structure 122. Alternatively, the upper wall 320 may stop short of the mounting structure 122 such that a gap is formed between the edge of the upper wall 320 and the mounting structure 122.

When assembled, the front wall 310 covers the air vent 240 (shown in Figure 3) and the filter element 270 (shown in Figure 3) as well as the filter cover 244 (Figure 12) to prevent dirt, debris and water entry into the sensor housing 210. In an exemplary embodiment, the filter cover 244 includes a surface area (for example, X by Y) and the front wall 310 of the protection cover 300 has a surface area larger than the surface area of the filter cover (for example, at least 2X by 2Y). As such, the front wall 310 covers not only the filter cover 244, but also the air gaps around the edges of the filter cover 244 as well as surrounding portions of the sensor housing 210 around the pocket 242 and the filter cover 244. The upper wall 320 may cover a portion of the filter cover 244 to prevent dirt, debris and water entry into the sensor housing 210, such as the upper edge of the filter cover 244 and the air gaps around the upper edge of the filter cover 244.

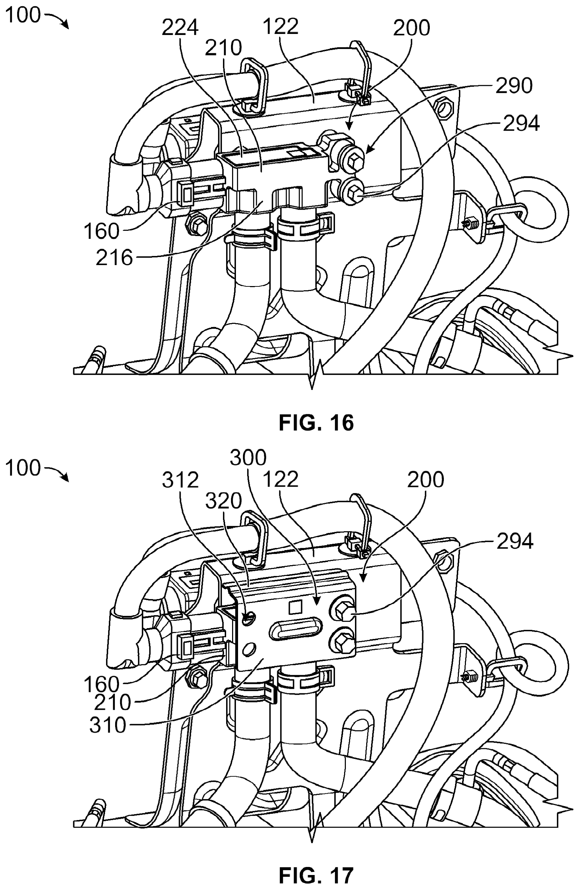

Figure 16 illustrates a portion of the vehicle exhaust system 100 in accordance with an exemplary embodiment showing the differential pressure sensor assembly 200 in a second mounting orientation with the protective cover 300 removed to illustrate the sensor housing 210. Figure 17 illustrates a portion of the vehicle exhaust system 100 in accordance with an exemplary embodiment showing the differential pressure sensor assembly 200 in the second mounting orientation with the protective cover 300 installed. In the second orientation, the sensor housing 210 is mounted to the mounting structure 122 with the air vent 240 and the filter cover 244 facing rearward toward the mounting structure 122. The mounting bracket 290 is located at the right side of the sensor housing 210 and the electrical connector 160 is coupled to the left side of the sensor housing 210. The bolts 294 pass through the openings 312 at the right side of the protective cover 300 and the mounting openings 292 at the right side of the sensor housing 210.

When assembled, the front wall 310 of the protective cover 300 extends along and covers the rear 216 of the sensor housing 210 and the upper wall 320 extends along and covers the top 224 of the sensor housing 210. The upper wall 320 extends toward the mounting structure 122. The upper wall 320 may abut against the mounting structure 122 and/or overlap the mounting structure 122. Alternatively, the upper wall 320 may stop short of the mounting structure 122 such that a gap is formed between the edge of the upper wall 320 and the mounting structure 122. The protective cover 300 covers portions of the sensor housing 210 to prevent dirt, debris and water entry into the sensor housing 210.

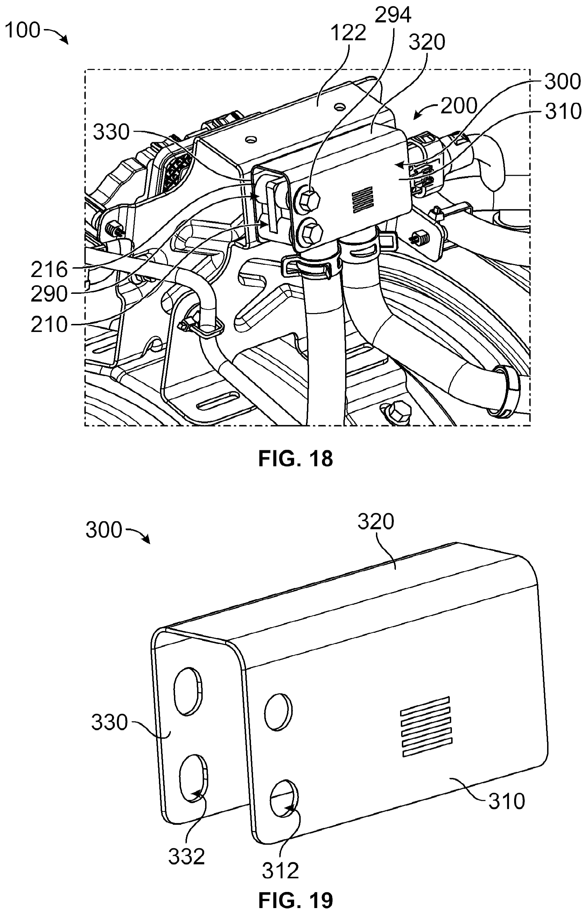

Figure 18 illustrates a portion of the vehicle exhaust system 100 showing the differential pressure sensor assembly 200 with a protective cover 300 in accordance with an exemplary embodiment. Figure 19 is a perspective view of the protection cover 300 shown in Figure 18 in accordance with an exemplary embodiment. In the illustrated embodiment, the protective cover 300 is U-shaped including the front wall 310, the upper wall 320, and a rear wall 330.

The rear wall 330 is stamped and formed with the front wall 310 and the upper wall 320. The rear wall 330 extends from the upper wall 320 opposite the front wall 310. The rear wall 330 is configured to extend along and cover the rear 216 of the sensor housing 210. The rear wall 330 may be generally planar. The rear wall 330 may extend generally perpendicular to the upper wall 320. The rear wall 330 may extend generally parallel to the front wall 310. In an exemplary embodiment, the rear wall 330 includes openings 332. The openings 332 are aligned with the openings 312 in the front wall 310 and are configured to be aligned with the mounting openings 292 of the mounting bracket 290 (Figure 18) to receive the bolts 294 to mount the differential pressure sensor assembly 200 to the mounting structure 122. The openings 332 may be elongated, such as being oval shaped, to allow for misalignment of the openings 312, 332.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. Dimensions, types of materials, orientations of the various components, and the number and positions of the various components described herein are intended to define parameters of certain embodiments, and are by no means limiting and are merely exemplary embodiments. Many other embodiments and modifications within the spirit and scope of the claims will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means - plus-function format and are not intended to be interpreted based on 35 U.S.C. § 112(f), unless and until such claim limitations expressly use the phrase "means for" followed by a statement of function void of further structure.

## Claims

1. A differential pressure sensor assembly comprising:
a sensor housing having a cavity, the sensor housing having an upstream pressure port and a downstream pressure port in flow communication with the cavity, the sensor housing having an air vent in flow communication with the cavity;
a pressure sensor device received in the cavity, the pressure sensor device sensing a pressure difference between the upstream pressure port and the downstream pressure port;
a filter element received in the air vent and a filter cover covering the filter element; and
a protection cover coupled to an exterior of the sensor housing, the protection cover covering the filter cover and the air vent to prevent access to the filter cover and the air vent.

2. The differential pressure sensor assembly of claim 1, wherein the protection cover includes a front wall and an upper wall extending from the front wall, the front wall covering the filter element and the filter cover.

3. The differential pressure sensor assembly of claim 1 or 2, wherein the protection cover includes a stamped and formed body manufactured from a metal sheet.

4. The differential pressure sensor assembly of claim 1, 2 or 3, wherein the protection cover includes an orientation feature to orient the protection cover relative to the sensor housing.

5. The differential pressure sensor assembly of claim 4, wherein the orientation feature includes a protrusion, the protrusion extending away from the sensor housing.

6. The differential pressure sensor assembly of any preceding claim, wherein the protection cover includes a strengthening rib to provide rigidity to the protection cover.

7. The differential pressure sensor assembly of any preceding claim, wherein the filter cover includes a surface area, the protection cover having a surface area larger than the surface area of the filter cover to cover portions of the sensor housing surrounding the filter cover.

8. The differential pressure sensor assembly of any preceding claim, wherein the sensor housing includes a mounting bracket having mounting openings, the protection cover including openings aligned with the mounting openings, the openings and the mounting openings receiving bolts to mount the differential pressure sensor assembly to a structure.

9. The differential pressure sensor assembly of any preceding claim, wherein the sensor housing includes a front, a rear, a first side, a second side, a top, and a bottom, the air vent be located at the front, the protection cover covering the front of the sensor housing.

10. The differential pressure sensor assembly of claim 9, wherein the protection cover includes a front wall and an upper wall extending from the front wall, the front wall extending along and covering the front of the sensor housing, the upper wall extending along and covering the top of the sensor housing.

11. The differential pressure sensor assembly of claim 10, wherein the protection cover includes a rear wall extending from the upper wall opposite the front wall, the rear wall extending along and covering the rear of the sensor housing.

12. The differential pressure sensor assembly of claim 10 or 11, wherein the protection cover includes a side wall extending from at least one of the front wall and the upper wall, the side wall extending along and covering the first side of the sensor housing.

13. The differential pressure sensor assembly of claim 10, 11 or 12, wherein the protection cover includes a bottom wall extending from the front wall opposite the upper wall, the bottom wall extending along and covering the bottom of the sensor housing.

14. The differential pressure sensor assembly of any preceding claim, wherein the sensor housing includes a lid at the top of the sensor housing closing the cavity, the protection cover covering the lid.

15. A differential pressure sensor assembly comprising:
a sensor housing having walls forming a cavity, the sensor housing including a front, a rear, a first side, a second side, a top and a bottom, the sensor housing having an upstream pressure port and a downstream pressure port in flow communication with the cavity, the sensor housing having an air vent at the front in flow communication with the cavity;
a pressure sensor device received in the cavity, the pressure sensor device sensing a pressure difference between the upstream pressure port and the downstream pressure port;
a filter element received in the air vent and a filter cover covering the filter element; and
a protection cover coupled to an exterior of the sensor housing, the protection cover including a front wall, a rear wall and an upper wall, the front wall extending along the front of the sensor housing to cover the filter cover and the air vent to prevent access to the filter cover and the air vent, the rear wall extending along the rear of the sensor housing, the upper wall extending along the top of the sensor housing.

16. The differential pressure sensor assembly of claim 15, wherein the protection cover includes an orientation feature to orient the protection cover relative to the sensor housing.

17. The differential pressure sensor assembly of claim 15 or 16, wherein the protection cover includes a strengthening rib to provide rigidity to the protection cover.

18. The differential pressure sensor assembly of claim 15, 16 or 17, wherein the sensor housing includes a mounting bracket having mounting openings, the protection cover including openings aligned with the mounting openings, the openings and the mounting openings receiving bolts to mount the differential presence or sensor assembly to a structure.

19. A diesel particulate filter system comprising:
a diesel particulate filter configured to remove particulate matter from engine exhaust gases; and
a differential pressure sensor assembly operatively coupled to the diesel particulate filter, the differential pressure sensor assembly including:
a sensor housing having a cavity, the sensor housing having an upstream pressure port in flow communication with an upstream portion of the diesel particulate filter and a downstream pressure port in flow communication with a downstream portion of the diesel particulate filter, the upstream and downstream pressure ports being in flow communication with the cavity, the sensor housing having an air vent in flow communication with the cavity;
a pressure sensor device received in the cavity, the pressure sensor device sensing a pressure difference between the upstream pressure port and the downstream pressure port;
a filter element received in the air vent and a filter cover covering the filter element; and
a protection cover coupled to an exterior of the sensor housing, the protection cover covering the filter cover and the air vent to prevent access to the filter cover and the air vent.

20. The diesel particulate filter system of claim 19, wherein the sensor housing includes a front, a rear, a first side, a second side, a top, and a bottom, the air vent be located at the front, the protection cover including a front wall and an upper wall extending from the front wall, the front wall extending along and covering the front of the sensor housing, the upper wall extending along and covering the top of the sensor housing.
